# FASCICULE DE BREVET EUROPEEN

(11) **EP 0 326 443 B1**
(45) Date de publication et mention de la délivrance du brevet: **04.05.1994**
(21) Numéro de dépôt: 89400045.4
(22) Date de dépôt: 06.01.1989
(51) Int. Cl.: C09J 7/04, A41D 27/06

(54) **Produit textile thermocollant réticulable**
Vernetzbares heisssiegelbares textiles Gebilde
Cross-linkable thermally adhesive textile item

(30) Priorité: 08.01.1988 FR 8800144
(43) Date de publication de la demande: 02.08.1989
(73) Titulaire: LAINIERE DE PICARDIE: Société anonyme, 80200 Peronne (FR)
(72) Inventeur: Groshens, Pierre, F-80200 Péronne (FR); Paire, Christian, F-80240 Roisel (FR)
(74) Mandataire: Derambure, Christian

(56) Documents cités:
- DE-A- 1 956 605
- DE-A- 2 313 021
- FR-A- 2 132 469
- FR-A- 2 348 955
- US-A- 4 194 618

## Description

L'invention concerne des produits thermocollants utilisables dans l'industrie textile. Ils comportent un support textile enduit de polymères thermocollants.

Les tissus de renfort destinés à être contre-coller sur une draperie de façon à améliorer sa tenue, ou renforcer sa nervosité font partie de cette catégorie.

Les supports textiles des produits thermocollants peuvent être de différentes natures, tissés, tricotés ou non tissés. Les propriétés recherchées pour les tissus de renfort ressortent des différentes phases de leur fabrication puis de leur utilisation.
. Le support textile une fois fabriqué est d'abord enduit avec la substance thermocollante. Actuellement, cette enduction est le plus souvent une enduction par point réalisée à l'aide d'un cylindre de gravure. Les polymères thermocollants initialement sous forme de poudre ou de pâte sont portés à une température de l'ordre de 80° qui leur permet d'entrer en fusion et d'adhérer au support. Selon une autre technique, l'enduction est réalisée par transfert. C'est-à-dire, que le polymère thermocollant est déposé sous forme de points par un cylindre de gravure sur un tapis traité pour être non adhésif ; ces points sont alors transférés à une température plus faible sur le support textile.
. Le produit textile thermocollant obtenu dans la première étape est ensuite stocké à température ambiante. Il est alors nécessaire que les différentes couches de ce produit en contact n'adhèrent pas les unes avec les autres. C'est-à-dire que le produit textile thermocollant ne doit pas présenter de "tack". Il faut donc que, revenu au voisinage de la température ambiante, le produit textile utilisé ne soit pas collant.
. Le produit textile thermocollant est ensuite utilisé par les confectionneurs qui l'applique contre les draperies et réalisent le collage du tissu de renfort sur la draperie à l'aide de presse fonctionnant à des températures comprises entre 120 et 180° sous des pressions de quelques décibars et quelques bars pendant des temps relativement courts de l'ordre de 10 à 30 secondes. Au cours de cette phase, les polymères du produit textile thermocollant doivent retrouver leur propriété d'adhésion. Toutefois, ils ne doivent pas avoir une trop faible viscosité lors de cette opération car sinon le polymères traverseront le support textile ou la draperie elle-même causant les retours ou traversées qui rendent les produits obtenus quasiment inutilisables.
. Enfin, les vêtements terminés et donc en particulier les draperies munies de tissu de renfort doivent supportés les différents modes d'utilisation et en particulier de lavage. Le collage réalisé à l'étape précédente doit donc résister à des ambiances très difficiles.

De nombreuses tentatives ont été faites pour réaliser des produits bien adaptés aux différentes contraintes résultant de l'ensemble des phases mentionnées plus haut.

Ainsi, il a été proposé par exemple de réaliser un adhésif constitué de deux ou plusieurs couches de polymères de caractéristique physique différente. En choisissant convenablement la viscosité et la température de fusion de ces différentes couches, on peut ainsi espérant limiter les traversées ou les retours. Toutefois, la mise en oeuvre de cette technique se révèle très délicate.

Le procédé de dépôt de la matière thermocollante sur le substrat textile dit par transfert mentionné plus haut permet d'éviter la pénétration excessive de la matière collante dans le substrat textile.

On a également proposé de déposer sur le substrat textile un polymère thermocollant et de le rendre thermodurcissable par l'action d'un agent de réticulation ultérieurement mis à son contact.

Selon le document DE-A-1 956 605, il est proposé la réalisation d'une triplure thermosoudable comportant une structure textile recouverte sur l'une de ses faces d'une matière de polymères ou de mélange de polymères essentiellement non réticulés, au moment de l'application, d'un point de ramollissement situé entre 50°C et 200°C dont une partie, au moins 10% en poids, est transformée en moins de cinq minutes à une température comprise entre 120°C et 200°C en une matière plastique insoluble réticulée... ; le document FR-A-2 132 469 concerne un renfort pour pièces de vêtements et son procédé de fabrication.

Selon ce procédé de fabrication, un support textile est pourvu, à sa surface, d'une masse durcissante composée d'une substance plastifiée ou thermodurcissable dont le degré de durcissement varie selon le degré de rigidité désiré.

L'enduction et son éventuelle réticulation sont seulement destinées à modifier la rigidité du produit.

Le document FR-A-2 348 955 concerne un procédé d'enduction d'un substrat avec un mélange d'une résine époxy et d'un durcisseur. Le produit ainsi obtenu est un textile enduit dont les propriétés sont stables et ne sont pas susceptibles d'être ultérieurement modifiées par une quelconque action physique ou chimique. Ces produits ne sont pas thermocollants, la réticulation des polymères est immédiate et complète pendant l'application.

Le document DE-A-2 313 021 décrit des compositions thermo-adhésives polymérisables.

Le document US-A-419 618 concerne la fabrication d'une courroie thermocollante.

Le but de la présente invention est donc la réalisation d'un produit textile thermocollant, utilisable notamment comme tissu de renfort, qui puisse être contrecollé sans retours ni traversées, et soit résistant à l'usage, particulièrement aux agents de nettoyage des vêtements.

Afin de résoudre ce problème selon l'invention il est proposé un produit thermocollant du type comprenant un support textile et une couche thermoadhésive déposée à sa surface caractérisée en ce que la couche thermoadhésive comporte des polymères réticulables sous l'effet d'une action extérieure.

L'invention sera mieux comprise à la lecture de la description qui va suivre.

D'une manière surprenante, il est possible de réaliser un produit therioadhésif constitué d'un support textile sur lequel est déposée une couche de polymères thermoadhésive, thermoplastique, réticulable sous l'effet d'une action extérieure telle que par exemple l'élévation de leur température ou l'irradiation par une énergie radiante tel que le rayonnement ultraviolet. Ces polymères ont un comportement thermoplastique tant qu'ils sont soumis à des températures inférieures à une température dite température de transformation. En dessous de cette température ils peuvent donc passer de leur état pâteux à la température ambiante à un état liquide aux alentours de 90°C.

Lorsqu'ils sont soumis à une température supérieure par exemple de l'ordre de 120 à 130°, la réaction de réticulation est déclenchée rendant ces polymères thermodurcissables.

Le produit thermocollant de l'invention est obtenu selon un procédé traditionnel d'enduction par points à l'aide d'un cylindre de photogravure. Le produit pâteux constituant la couche thermoadhésive est alors porté à une température aux alentours de 80° puis déposé sur le support textile. Celui-ci est ainsi mouillé, ce qui assure l'adhésion de la couche.

Après refroidissement, le produit thermocollant obtenu ne présente aucun "tack" c'est-à-dire qu'il m'est pas à cette température adhésif. Il est ainsi possible de le stocker dans de bonnes conditions.

Lors de son utilisation afin de contre collage, par exemple par des confectionneurs dans le cas du contre-collage sur draperie, le produit thermocollant est porté à une température comprise entre 120 et 150°. Lors de la montée en température deux phénomènes se produisent : le premier est la diminution de la viscosité de la couche thermoadhésive compte tenu du caractère thermoplastique des polymères, et la réticulation de ces mêmes polymères. Ces deux phénomènes engendrent des effets contradictoires sur la viscosité de la couche thermoadhésive. Ainsi, celle-ci diminue tout d'abord fortement puis augmente à nouveau.

Le choix des vitesses de réaction déterminé par la nature des composants et la présence éventuelle d'un catalyseur de réticulation permet d'agir sur la viscosité minimale de la couche adhésive et sur le temps pendant lequel elle a cette faible viscosité.

Il est ainsi possible de constituer une couche thermoadhésive qui permet une bonne mouillabilité du substrat sur lequel est réalisé le contre-collage sans qu'il puisse lors de cette phase de contre-collage se produire ni retour ni traversée.

La réticulation des produits par une action extérieure qui peut être soit l'élévation de la température soit l'effet d'une énergie radiante tels que les ultraviolets.

Différentes familles de polymères peuvent être utilisées pour réaliser la couche thermoadhésive selon l'invention. Ils peuvent être par exemple à base d'uréthane acrylate, d'éthylène vinyle acétate modifié, ou encore de copolymères vinyliques.

Le support textile peut être de toute nature, par exemple tricoté, tissé ou non tissé, et les substrats destinés à recevoir le produit thermocollant de l'invention peuvent être de différente nature aussi, textile, matière synthétique ou métallique.

## Revendications

1. Entoilage textile thermocollant comprenant un support textile et une couche thermoadhésive déposée par points à sa surface, caractérisé en ce que la couche thermoadhésive comporte des polymères thermoadhésifs, thermoplastiques non réticulés, réticulables sur eux-mêmes par élévation de leur température ou application d'un rayonnement.

2. Entoilage textile thermocollant selon la revendication 1, caractérisé en ce que la couche thermoadhésive comporte en plus un catalyseur.

3. Entoilage textile thermocollant selon l'une quelconque des revendications 1 et 2, caractérisé en ce que les polymères thermo-adhésifs, thermoplastiques réticulables de la couche adhésive sont à base d'uréthane acrylate.

4. Entoilage textile thermocollant selon l'une quelconque des revendications 1 et 2, caractérisé en ce que les polymères thermo-adhésifs, thermoplastiques réticulables sont à base d'éthylène vinyle acétate modifié.

5. Entoilage textile thermocollant selon l'une quelconque des revendications 1 et 2, caractérisé en ce que les polymères thermo-adhésifs, thermoplastiques réticulables sont à base de copolymères vinyliques.

## Claims

1. Thermoadhesive textile fabric covering including a textile support and a thermoadhesive film placed by points on its surface, wherein the thermoadhesive film comprises non-cross-linked thermoplastic thermoadhesive polymers able to cross-linked by raising their temperature or applying a radiation.

2. Thermoadhesive textile fabric covering according to claim 1, wherein the thermoadhesive film also comprises a catalyst.

3. Thermoadhesive textile fabric covering according to claim 1 or 2, wherein the cross-linkable thermoplastic thermoadhesive polymers of the adhesive film have an acrylate urethane base.

4. Thermoadhesive textile fabric covering according to claim 1 or 2, wherein the cross-linkable thermoplastic thermoadhesive polymers have a modified acetate vinyl ethylene base.

5. Thermoadhesive textile fabric covering according to claim 1 or 2, wherein the cross-linkable thermoplastic thermoadhesive polymers have a vinyl copolymer base.

## Patentansprüche

1. Fixierter Einlagestoff, bestehend aus einer Textilunterlage und einer auf deren Oberfläche aufgesteppten heißklebenden Schicht, dadurch gekennzeichnet, daß die heißklebende Schicht vernetzbare, heißklebende thermoplastische Polymere besitzt, die durch Erhöhung ihrer Temperatur oder Bestrahlung vernetzt werden können.

2. Fixierter Einlagestoff nach Patentanspruch 1, dadurch gekennzeichnet, daß die heißklebende Schicht zusätzlich einen Katalysator besitzt.

3. Fixierter Einlagestoff nach Patentanspruch 1 und 2, dadurch gekennzeichnet, daß die vernetzbaren, heißklebenden thermoplastischen Polymere der heißklebenden Schicht auf der Grundlage von Urethanacrylat gebildet sind.

4. Fixierter Einlagestoff nach Patentanspruch 1 und 2, dadurch gekennzeichnet, daß die vernetzbaren, heißklebenden thermoplastischen Polymere der heißklebenden Schicht auf der Grundlage von modifiziertem Ethylenvinylacetat gebildet sind.

5. Fixierter Einlagestoff nach Patentanspruch 1 und 2, dadurch gekennzeichnet, daß die vernetzbaren, heißklebenden thermoplastischen Polymere der heißklebenden Schicht auf der Grundlage von Vinyl-Copolymeren gebildet sind.
